Europäisches Patentamt

European Patent Office

Office européen des brevets

(19)

(11) Numéro de publication : **0 363 278 B1**

(12) **FASCICULE DE BREVET EUROPEEN**

(45) Date de publication du fascicule du brevet :
08.01.92 Bulletin 92/02

(51) Int. Cl.⁵ : **B60Q 3/02**

(21) Numéro de dépôt : **89402734.1**

(22) Date de dépôt : **04.10.89**

(54) **Dispositif d'éclairage intérieur pour véhicule automobile.**

(30) Priorité : **04.10.88 FR 8813305**

(43) Date de publication de la demande :
**11.04.90 Bulletin 90/15**

(45) Mention de la délivrance du brevet :
**08.01.92 Bulletin 92/02**

(84) Etats contractants désignés :
**DE GB IT**

(56) Documents cités :
**US-A- 2 783 365**
**US-A- 3 811 043**
**US-A- 4 600 978**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Moreau, Michel Louis**
**110, rue Gabriel Péri**
**F-28000 Chartres (FR)**

(74) Mandataire : **Boivin, Claude**
**9, rue Edouard-Charton**
**F-78000 Versailles (FR)**

EP 0 363 278 B1

## Description

On connait des dispositifs d'éclairage intérieur pour véhicule automobile, destinés à permettre en particulier la lecture d'une carte, qui comportent un boîtier, une lampe électrique à l'intérieur du boîtier, un écran mobile pour occulter une partie variable du faisceau lumineux provenant de la lampe et un interrupteur lié à l'écran mobile et interposé sur le circuit d'alimentation de cette lampe (voir par ex. US-A-2783365).

La présente invention a pour objet un dispositif d'éclairage de ce type dont la manoeuvre est particulièrement simple.

Ce dispositif est caractérisé en ce que l'interrupteur est lié à l'écran mobile de manière à être ouvert quand cet écran occupe une position moyenne neutre et fermé quand il occupe l'une ou l'autre de deux positions actives situées de part et d'autre de cette position neutre.

Une seule manoeuvre suffit ainsi pour allumer la lampe et pour déterminer le choix du côté à éclairer.

On a décrit ci-après, à titre d'exemple non limitatif, un mode de réalisation du dispositif d'éclairage selon l'invention, avec référence aux dessins annexés dans lesquels :

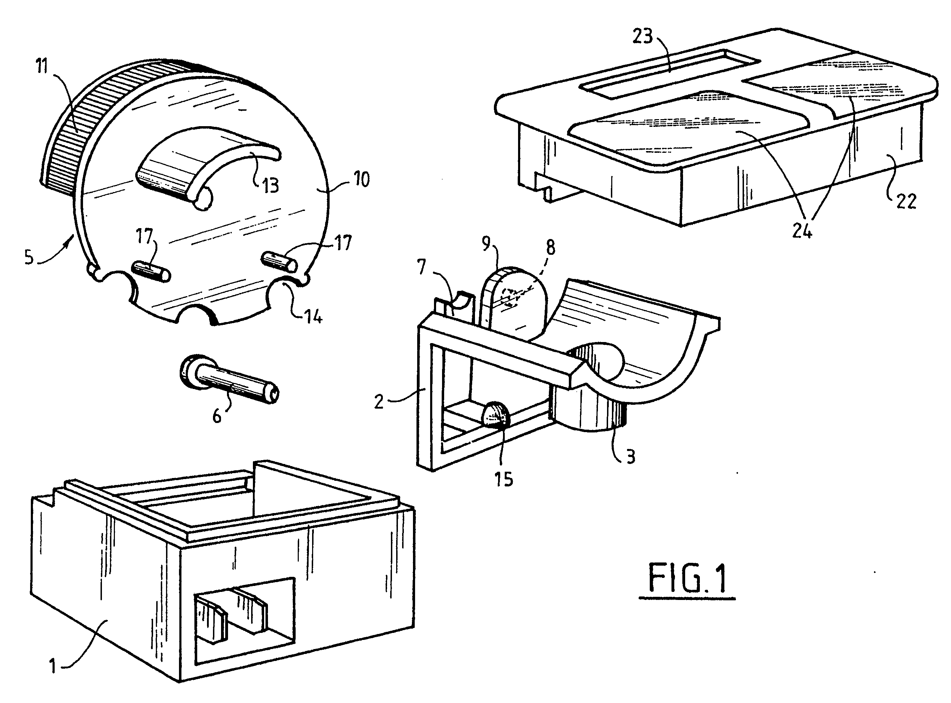

La Figure 1 en est une vue en perspective, ses différents éléments étant montrés séparés ;

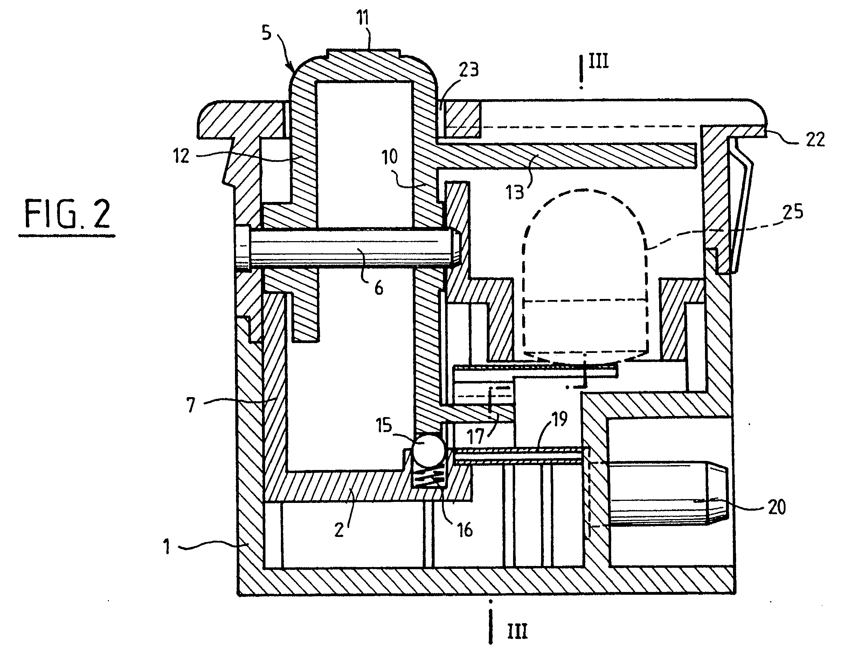

La Figure 2 en est une vue en coupe suivant II-II de la Figure 3 ;

La Figure 3 en est une vue en coupe suivant III-III de la Figure 2, le dispositif étant dans sa position éteinte ;

La Figure 4 est une vue semblable à la Figure 3, le dispositif étant dans l'une de ses positions d'utilisation.

Tel qu'il est représenté au dessin, le dispositif selon l'invention comprend un boîtier inférieur 1 dans lequel peut être engagé un boîtier intérieur 2 ; celui-ci porte dans sa partie centrale un manchon 3 dans lequel peut être engagée et fixée une lampe 25 comportant une ampoule avec son réflecteur.

Une molette 5 peut pivoter dans le boîtier 2 autour d'un axe 6 qui est supporté par une patte 7 de ce boîtier et engagée dans un trou 8 ménagé dans une languette 9 dudit boîtier. Cette molette est formée d'un voile circulaire 10 qui est solidaire d'une portion périphérique extérieure moletée 11 s'étendant sur un angle d'environ 160° et prolongée par une paroi 12 parallèle au voile 10. Celui-ci porte sur sa face intérieure un écran 13 en arc de cercle mobile devant le spot ; lorsque la molette pivote, cet écran vient rencontrer la paroi du boîtier intérieur 2, ce qui limite le pivotement de la molette.

A sa périphérie, le voile 10 présente trois encoches 14 dans l'une ou l'autre desquelles peut s'engager une bille de verrouillage 15 soumise à l'action d'un ressort 16 prenant appui sur le boîtier intérieur 2. Sur sa face intérieure, le voile porte deux doigts 17 propres à faire basculer dans un sens ou dans l'autre un levier d'interrupteur 18 qui est monté pivotant autour d'un axe 19 par rapport au boîtier 2 et est sollicité dans sa position moyenne par des moyens élastiques. Cet interrupteur est relié à un connecteur 20 et la tête du levier 18 peut venir au contact d'une lamelle élastique 21 reliée à la lampe 25.

L'ensemble est recouvert par un boîtier d'aspect 22 qui est emboîté sur le boîtier 1 et est maintenu en place par l'axe 6 qui le traverse. Ce boîtier présente à sa partie supérieure une ouverture 23 pour le passage de la molette 5 et deux voiles transparents 24. On notera que l'écran 13 est disposé à l'intérieur du boîtier entre la lampe et les voiles 24.

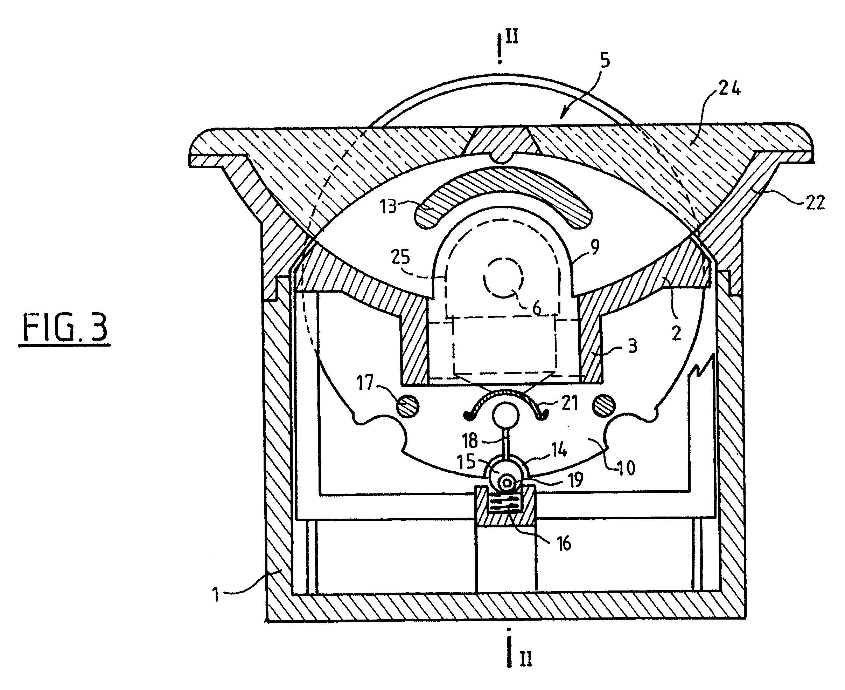

A la Figure 3, la molette 5 est dans sa position moyenne dans laquelle elle est verrouillée par l'engagement de la bille 15 dans l'encoche 14 médiane. Le levier d'interrupteur 18 est également dans sa position moyenne et sa tête est écartée de la lamelle élastique 21.

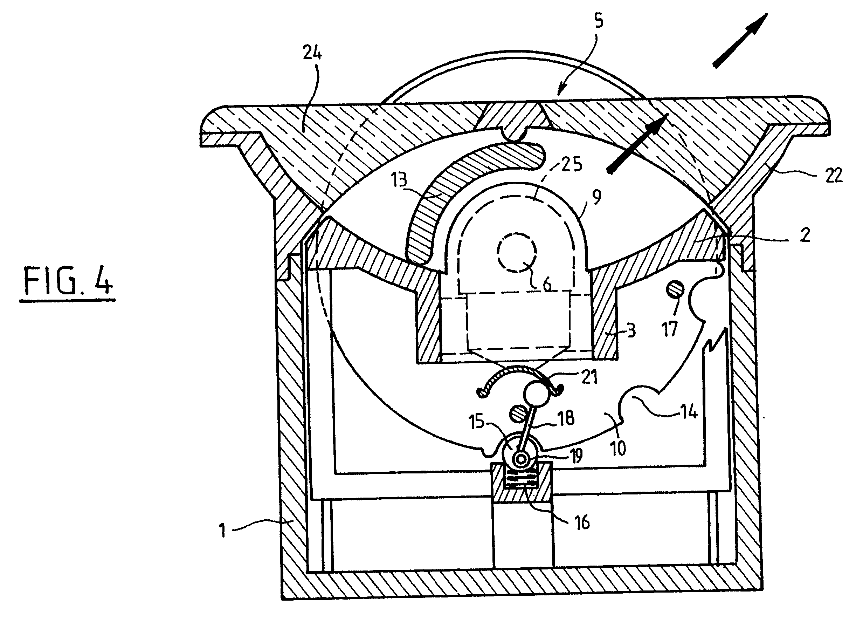

Pour allumer la lampe, on fait pivoter la molette 5, dans un sens ou dans l'autre, jusqu'à ce que l'écran 13 vienne au contact de la paroi du boîtier 2 (Figure 4). La bille 15 s'engage dans l'encoche d'extrémité correspondante 14 et verrouille la molette dans sa position d'utilisation. Lors du pivotement de la molette, que le conducteur peut effectuer sans quitter la route des yeux, l'un des doigts 17 vient rencontrer le levier d'interrupteur 18 et le fait basculer de sorte que sa tête vient au contact de la lamelle 21, ce qui ferme le circuit d'alimentation de la lampe électrique. L'écran 13 ne laisse passer le faisceau lumineux que d'un côté ou de l'autre suivant le sens dans lequel on a fait pivoter la molette.

## Revendications

1. Dispositif d'éclairage intérieur pour véhicule comportant un boîtier, une lampe électrique à l'intérieur du boîtier, un écran mobile (13) pour occulter une partie variable du faisceau lumineux provenant de la lampe et un interrupteur lié à l'écran mobile et interposé sur le circuit d'alimentation de cette lampe, caractérisé en ce que l'interrupteur est lié à l'écran mobile (13) de manière à être ouvert quand cet écran occupe une position moyenne neutre et fermé quand il occupe l'une ou l'autre des deux positions actives situées de part et d'autre de cette position neutre.

2. Dispositif d'éclairage selon la revendication 1, caractérisé en ce que l'écran mobile (13) est porté par une molette de commande (5) montée pivotante par rapport à un boîtier fixe.

3. Dispositif d'éclairage selon la revendication 2, caractérisé en ce que l'écran mobile (13) est disposé à l'intérieur du boîtier.

4. Dispositif d'éclairage selon la revendication 2 ou 3, caractérisé en ce que la molette de commande (5) porte des doigts (17) propres à faire basculer un levier d'interrupteur (18).

5. Dispositif d'éclairage selon l'une des revendications 2 à 4, caractérisé en ce que la molette de commande (5) présente trois évidements ou crantages périphériques (14) dans l'un ou l'autre desquels peut s'engager un élément de verrouillage (15).

6. Dispositif d'éclairage selon l'une des revendications 2 à 5, caractérisé en ce que le boîtier comprend un élément inférieur (1) et un élément intérieur (2) dans lequel est monté l'axe (6) de la molette (5).

7. Dispositif d'éclairage selon la revendication 6, caractérisé en ce que le boîtier comprend en outre un élément d'aspect (22) qui présente une ouverture (23) pour le passage de la molette et est assemblé à l'élément intérieur (2) par l'axe (6).

8. Dispositif d'éclairage selon l'une des revendications 2 à 7, caractérisée en ce que le boîtier présente une ouverture (23) à travers laquelle la molette (5) fait saillie.

## Patentansprüche

1. Einrichtung zur Innenbeleuchtung für Fahrzeuge mit einem Gehäuse, einer elektrischen Lampe im Inneren des Gehäuses, einem verstellbaren Schirm (13), um einen wechselnden Anteil des von der Lampe kommenden Lichtstrahles abzudecken und einem Ein-Aus-Umschalter, der mit dem verstellbaren Schirm verbunden und in den Speisestromkreis dieser Lampe eingeschaltet ist, **dadurch gekennzeichnet,** daß der Ein-Aus-Umschalter mit dem verstellbaren Schirm (13) in der Weise verbunden ist, daß er geöffnet ist, wenn der Schirm eine neutrale mittlere Stellung einnimmt, und geschlossen ist, wenn er die eine oder andere der wirksamen Stellungen einnimmt, die sich beiderseits dieser neutralen Stellung befinden.

2. Beleuchtungseinrichtung nach Anspruch 1, **dadurch gekennzeichnet,** daß der verstellbare Schirm (13) von einer Antriebsscheibe (5) getragen ist, welche in bezug auf ein feststehendes Gehäuse schwenkbar befestigt ist.

3. Beleuchtungseinrichtung nach Anspruch 2, **dadurch gekennzeichnet,** daß der verstellbare Schirm (13) im Inneren des Gehäuses angeordnet ist.

4. Beleuchtungseinrichtung nach Anspruch 2 oder 3, **dadurch gekennzeichnet,** daß die Antriebsscheibe (5) Finger (17) enthält, die einen Hebel (18) des Ein-Aus-Umschalters umzulegen geeignet sind.

5. Beleuchtungseinrichtung nach einem der Ansprüche 2 bis 4, **dadurch gekennzeichnet,** daß die Antriebsscheibe (5) drei peripherische Aussparungen oder Rastkerben (14) aufweist, von denen die eine oder die andere ein Verriegelungselement (15) aufnehmen kann.

6. Beleuchtungseinrichtung nach einem der Ansprüche 2 bis 5, **dadurch gekennzeichnet,** daß das Gehäuse einen unteren Teil (1) und einen inneren Teil (2) enthält, in den die Achse (6) der Scheibe (5) eingesetzt ist.

7. Beleuchtungseinrichtung nach Anspruch 6, **dadurch gekennzeichnet,** daß das Gehäuse außerdem einen äußeren Rahmen (22) besitzt, der eine Öffnung (23) für den Durchlaß der Scheibe enthält und an dem inneren Teil (2) durch die Achse (6) angefügt ist.

8. Beleuchtungseinrichtung nach einem der Ansprüche 2 bis 7, **dadurch gekennzeichnet,** daß das Gehäuse eine Öffnung (23) aufweist, aus der die Scheibe (5) hervortritt.

## Claims

1. Internal lighting device for a motor vehicle and comprising one box, one electric lamp inside the box, one mobile screen (13) for concealing one variable portion of the light beam originating from the lamp, and one switch linked to the mobile screen and inserted on the circuit for feeding this lamp, wherein the switch is linked to the mobile screen (13) so as to be open when this screen occupies a mean neutral position and closed when it occupies either of the two active positions situated on both sides of this neutral position.

2. Lighting device according to claim 1, wherein the mobile screen (13) is borne by a control roller (5) mounted pivoting with respect to a fixed box.

3. Lighting device according to claim 2, wherein the mobile screen (13) is disposed inside the box.

4. Lighting device according to claim 2 or 3, wherein the control roller (5) bears fingers (17) able to tilt a switch lever (18).

5. Lighting device according to any one of claims 2 to 4, wherein the control roller (5) has three peripheral recesses or serrations (14) in any of which a locking element (15) is able to be engaged.

6. Lighting device according to any one of claims 2 to 5, wherein the box includes one lower element (1) and one internal element (2) in which the spindle (6) of the roller (5) is mounted.

7. Lighting device according to claim 6, wherein the box further includes one aspect element (22) having one opening (23) for passage of the roller and is joined to the internal element (2) by a spindle (6).

8. Lighting device according to any one of claims 2 to 7, wherein the box has one opening through which the roller (5) projects.

FIG.1

EP 0 363 278 B1

FIG. 2

EP 0 363 278 B1

FIG. 3

FIG. 4

EP 0 363 278 B1